(19) Europäisches Patentamt
European Patent Office
Office européen des brevets

(11) **EP 1 620 642 B1**

(12) **EUROPÄISCHE PATENTSCHRIFT**

(45) Veröffentlichungstag und Bekanntmachung des Hinweises auf die Patenterteilung:
**28.02.2007   Patentblatt 2007/09**

(21) Anmeldenummer: **04717566.6**

(22) Anmeldetag: **05.03.2004**

(51) Int Cl.:
**F02D 41/34** *(2006.01)*

(86) Internationale Anmeldenummer:
**PCT/EP2004/002261**

(87) Internationale Veröffentlichungsnummer:
**WO 2004/097201 (11.11.2004 Gazette 2004/46)**

(54) **VERFAHREN UND VORRICHTUNGEN ZUR BESTIMMUNG EINES KORREKTURWERTES FÜR EINE GEMESSENE SEGMENTZEIT**

METHODS AND DEVICES FOR DETERMINING A CORRECTION VALUE FOR A MEASURED SEGMENT TIME

PROCEDES ET DISPOSITIFS POUR DETERMINER UNE VALEUR DE CORRECTION POUR UN TEMPS DE SEGMENT MESURE

(84) Benannte Vertragsstaaten:
**DE FR GB**

(30) Priorität: **25.04.2003   DE 10318839**

(43) Veröffentlichungstag der Anmeldung:
**01.02.2006   Patentblatt 2006/05**

(73) Patentinhaber: **SIEMENS AKTIENGESELLSCHAFT**
**80333 München (DE)**

(72) Erfinder: **BRUNS, Carsten**
**93055 Regensburg (DE)**

(56) Entgegenhaltungen:
**EP-A- 0 583 495          DE-A- 4 133 679**
**DE-A- 19 622 042          US-A- 5 734 100**

EP 1 620 642 B1

**Beschreibung**

Die Erfindung betrifft Verfahren und Vorrichtungen zur Bestimmung eines Korrekturwertes für eine gemessene Segmentzeit, die eine Welle einer Brennkraftmaschine, insbesondere eine Kurbelwelle benötigt, um sich um eine definierte Winkelspanne zu drehen.

Dabei erfolgt die Messung der Segmentzeit, indem die Welle selbst oder ein damit verbundenes Geberrad Markierungen aufweist, die von Sensoren abgetastet werden. Das Gebersystem kann beispielsweise einen Induktiv- oder Hallgeber und ein Segmentrad umfassen. Gemessen wird die Zeit, die die Welle braucht, um sich um einen bestimmten Drehwinkel zu drehen. Allgemein kann somit die Drehzahl der Welle gemessen werden. Es ist jedoch ebenfalls möglich, Drehzahlschwankungen zu erfassen, wobei die Genauigkeit der Auflösung vom Abstand der Markierungen auf dem Umfang der Welle oder des Geberrades abhängt, das heißt von der Segmentgröße. Derartige Messungen werden insbesondere dazu eingesetzt, die Laufunruhe von Brennkraftmaschinen zu ermitteln, wobei beispielsweise eine kurzzeitige Verlangsamung der Winkelgeschwindigkeit der Kurbelwelle mit einem Verbrennungsaussetzer in Verbindung gebracht werden kann. Dies gilt insbesondere, wenn die Markierungen auf der Kurbelwelle oder dem Geberrad in einem Abstand angebracht sind, der den Arbeitshüben der einzelnen Zylinder entspricht.

In der Praxis können jedoch die Markierungen oder das Geberrad mechanische Fehler oder Ungenauigkeiten aufweisen, beispielsweise Winkelfehler der Segmente oder Markierungszähne des Geberrades, einen Scheibenschlag oder Abweichungen in der Zahnform. Derartige Fehler oder Ungenauigkeiten führen dazu, dass das Ergebnis der Winkelgeschwindigkeitsmessungen verfälscht wird.

Zur Lösung dieses Problems ist es aus der EP 0 583 495 A1 bereits bekannt, die durch die genannten mechanischen Fehler oder Ungenauigkeiten verursachten Fehler bei der Messung der Segmentzeiten zu erkennen und zu kompensieren.

Gemäß einer ersten in der EP 0 583 495 A1 beschriebenen Ausführungsform werden für ein Bezugssegment im Abstand von zwei Kurbelwellenumdrehungen die Segmentzeiten gemessen. Die weiteren zwischen diesen beiden Messungen gemessenen Segmentzeiten werden mit dem Bezugssegment verglichen, und in Abhängigkeit von der errechneten Zeitdifferenz wird ein Korrekturwert ermittelt, der zylinderindividuell eine Korrektur der gemessenen Segmentzeit ermöglicht. Zu diesem Zweck wird der folgende mathematische Zusammenhang ausgewertet:

$$AZ'_n = (TG_n - TG_0)/TG_0 + [n/(z*TG_0)]*(TG_0 - TG_{0'})$$
$$= [(TG_n - TG_0) - (n/z)*(TG_{0'} - TG_0)]/TG_0, \qquad \text{(Formel 1)}$$

wobei

$z$      die Anzahl der Zylinder der Brennkraftmaschine ist,

$n$      die Nummer des gerade betrachteten Zylinders ist,

$TG_n$      die gemessene Segmentzeit des Zylinders mit der Nummer n ist,

$TG_0$      die gemessene Segmentzeit eines Bezugssegments eines Bezugszylinders ist,

$TG_{0'}$      die zwei Kurbelwellenumdrehungen nach der Segmentzeit $TG_0$ gemessene Segmentzeit des Bezugssegments des Bezugszylinders ist, und

$AZ'_n$      ein Korrekturwert für die Segmentzeit des Zylinders mit der Nummer n ist.

Bei diesem Ausdruck entspricht $TG_n - TG_0$ einem Vergleich der Segmentzeit des Segments n mit der Segmentzeit des Bezugssegments n=0. Die beiden Zeiten $TG_0$ und $TG_{0'}$ werden am selben Segment gemessen, so dass aus ihrer Differenz direkt auf eine Drehzahländerung geschlossen werden kann. Es wirkt jedoch nicht der Drehzahlabfall der vollen 720 °KW, die zwischen 0' und 0 liegen, auf das zu adaptierende Segment. Daher wird der Korrekturfaktor n/z berücksichtigt.

Bei einer zweiten in der EP 0 583 495 A1 beschriebenen Ausführungsform ist vorgesehen, dass die Segmentzeiten für ein Bezugssegment im Abstand von einer Kurbelwellenumdrehung gemessen werden. Die weiteren zwischen diesen beiden Messungen gemessenen Segmentzeiten werden mit diesem Bezugssegment verglichen, und in Abhängigkeit von der errechneten Zeitdifferenz wird ein Korrekturwert ermittelt, der segmentindividuell eine Korrektur der gemessenen Segmentzeit ermöglicht. Zu diesem Zweck wird der folgende Zusammenhang ausgewertet:

$$BZ'_n = (TB_n - TB_0)/TB_0 + [n/((z/2)*TG_0)]*(TG_0 - TG_{0'})$$
$$= [(TB_n - TB_0) - (2n/z)*(TB_{0'} - TB_0)]/TB_0, \qquad \text{(Formel 2)}$$

wobei

| | |
|---|---|
| z | die Anzahl der Zylinder der Brennkraftmaschine ist, |
| n | die Nummer des gerade betrachteten Segments ist, |
| $TB_n$ | die gemessene Segmentzeit des Segments mit der Nummer n ist, |
| $TB_0$ | die gemessene Segmentzeit eines Bezugssegments ist, |
| $TB_{0'}$ | die eine Kurbelwellenumdrehung nach der Segmentzeit $TG_0$ gemessene Segmentzeit des Bezugssegments ist, und |
| $BZ'_n$ | ein Korrekturwert für die Segmentzeit des Segments mit der Nummer n ist. |

Dabei unterscheidet sich das Bezugssegment von dem Bezugssegment gemäß dem ersten Verfahren der EP 0 583 495 A1 dadurch, dass es sich nicht mehr einem bestimmten Zylinder zuordnen lässt, sondern dass es sich um ein bestimmtes markiertes Segment der Kurbelwelle handelt, das als fehlerfrei definiert wird.

Die beiden aus der EP 0 583 495 A1 bekannten Verfahren zur Erkennung und Korrektur von Fehlern bei der Bestimmung der Segmentzeit arbeiten nur bei kleinen Drehzahlgradienten zufriedenstellend. Diese Beschränkung der Adaption auf kleine Drehzahlgradienten ergibt sich aus der Tatsache, dass die beiden vorstehend genannten Zusammenhänge eine Drehzahländerung nur unzureichend berücksichtigen.

Nachstehend wird dies für die erste Ausführungsform des aus der EP 0 583 495 A1 bekannten Verfahrens gezeigt. Das Segment n weist gegenüber dem Bezugssegment den relativen Fehler F auf, der zur adaptieren ist. Bei konstanter Drehzahl gilt:

$$TG_n = TG_0 *(1+F). \qquad \text{(Formel 3)}$$

Bei nicht konstanter Drehzahl muss anteilig die Segmentzeitänderung zwischen 0 und 0' berücksichtigt werden. Dann gilt:

$$TG_n = [TG_0 + (n/z)*(TG_{0'} - TG_0)]*(1+F). \qquad \text{(Formel 4)}$$

Setzt man die Formel 4 in die Formel 1 ein, so erhält man nach entsprechender Umformung:

$$AZ'_n = \{F*[TG_0 + (n/z)*(TG_{0'} - TG_0)]\}/TG_0. \qquad \text{(Formel 5)}$$

Formel 5 ist zu entnehmen, dass der ermittelte Adaptionswert $AZ_n$ nur für den Fall $TG_{0'} - TG_0 = 0$, das heißt bei konstanter Drehzahl, dem Fehler F entspricht. Anderenfalls ergibt sich eine Abweichung, die mit zunehmenden Drehzahlgradienten steigt und zu Fehlern führt.

Der Erfindung liegt die Aufgabe zugrunde, die gattungsgemäßen Verfahren und die gattungsgemäßen Vorrichtungen derart weiterzubilden, dass ein geeigneter Korrekturwert auch bei beliebigen Drehzahlgradienten bestimmt werden kann.

Diese Aufgabe wird durch die in den unabhängigen Ansprüchen genannten Merkmale gelöst.

Vorteilhafte Ausgestaltungen und Weiterbildungen der Erfindung ergeben sich aus den abhängigen Ansprüchen.

Eine erste Ausführungsform des erfindungsgemäßen Verfahrens baut auf den gattungsgemäßen Verfahren dadurch auf, dass bei der Bestimmung des Korrekturwertes der folgende Zusammenhang ausgewertet wird:

$$AZ_n = [(TG_n - TG_0) - (n/z) * (TG_{0'} - TG_0)] / [TG_0 + (n/z) * (TG_{0'} - TG_0)],$$

(Formel 6)

wobei

z      die Anzahl der Zylinder der Brennkraftmaschine ist,

n      die Nummer des gerade betrachteten Zylinders ist,

$TG_n$      die gemessene Segmentzeit des Zylinders mit der Nummer n ist,

$TG_0$      die gemessene Segmentzeit eines Bezugssegments eines Bezugszylinders ist,

$TG_{0'}$      die zwei Kurbelwellenumdrehungen nach der Segmentzeit $TG_0$ gemessene Segmentzeit des Bezugssegments des Bezugszylinders ist, und

$AZ_n$      ein Korrekturwert für die Segmentzeit des Zylinders mit der Nummer n ist.

Setzt man die Formel 4 in die Formel 6 ein, so erhält man nach entsprechender Umformung:

$$F = AZ_n,$$

das heißt der ermittelte Adaptionswert entspricht genau dem vorgegebenen Fehler F, unabhängig von eventuell vorhandenen Drehzahlgradienten. Dies ist insbesondere vorteilhaft, da die Adaptionswerte bei einigen Verbrennungsmotoren einem drehzahlabhängigen Drift unterliegen, was es erforderlich macht, den beim Stand der Technik beschränkten Bereich der Adaptionsmöglichkeiten aufzuweiten, um Verbrennungsaussetzer genauer erkennen zu können. Dadurch wird nicht nur die Kundenzufriedenheit erhöht, sondern auch die Erfüllung gesetzlicher Vorgaben wird vereinfacht.

Eine zweite Ausführungsform der erfindungsgemäßen Verfahren, baut auf dem gattungsgemäßen Stand der Technik dadurch auf, dass bei der Bestimmung des Korrekturwertes der folgende Zusammenhang ausgewertet wird:

$$BZ_n = [(TB_n - TB_0) - (2n/z) * (TB_{0'} - TB_0)] / [TB_0 + (2n/z) * (TB_{0'} - TB_0)],$$

(Formel 7)

wobei

z      die Anzahl der Zylinder der Brennkraftmaschine ist,

n      die Nummer des gerade betrachteten Segments ist,

$TB_n$      die gemessene Segmentzeit des Segments mit der Nummer n ist,

$TB_0$      die gemessene Segmentzeit eines Bezugssegments ist,

$TB_{0'}$      die eine Kurbelwellenumdrehung nach der Segmentzeit $TG_0$ gemessene Segmentzeit des Bezugssegments ist, und

$BZ_n$      ein Korrekturwert für die Segmentzeit des Segments mit der Nummer n ist.

Auch in diesem Fall entspricht der berechnete Korrekturwert exakt dem Fehler, unabhängig von eventuell vorhandenen Drehzahlgradienten.

Ähnlich wie bei der zweiten Ausführungsform des zitierten Standes der Technik lässt sich das Bezugssegment auch bei der zweiten Ausführungsform der erfindungsgemäßen Verfahren nicht mehr einem bestimmten Zylinder zuordnen. Weiterhin werden die Korrekturwerte für alle Segmente bestimmt, die sich im Verlauf einer Umdrehung der Kurbelwelle auf der Kurbelwelle befinden. Als Obergrenze für die Segmentzahl wird dabei die Hälfte der Zylinderanzahl z verwendet, das heißt z/2. Aus diesem Grund eignet sich die zweite Ausführungsform der erfindungsgemäßen Verfahren in erster Linie für geradzahlige Zylinderanzahlen z. Im Übrigen wird auf die Ausführungen zur ersten Ausführungsform der erfindungsgemäßen Verfahren verwiesen.

Die folgenden bevorzugten Weiterbildungen der erfindungsgemäßen Verfahren eignen sich sowohl für die erste als auch für die zweite Ausführungsform.

Dabei sieht eine erste bevorzugte Weiterbildung vor, dass die korrigierten Segmentzeiten $TK_n$ über den fol-

genden Zusammenhang bestimmt werden:

$$TK_n = TG_n * (1 - AZ_n)$$

beziehungsweise

$$TK_n = TB_n * (1 - BZ_n).$$

Alternativ kann vorgesehen sein, dass die korrigierten Segmentzeiten $TK_n$ über den folgenden Zusammenhang bestimmt werden:

$$TK_n = TG_n * (1 - AZM_n)$$

beziehungsweise

$$TK_n = TB_n * (1 - BZM_n),$$

wobei $AZM_n$ beziehungsweise $BZM_n$ gemittelte Korrekturwerte sind. Allgemein ist eine Mittelung empfehlenswert, da die systematischen Fehler der Segmente mit zufälligen Fehlern wie Schwankungen des dem Steuerungssystem zugrundeliegenden Systemtakts, Toleranzen bei der Schaltgenauigkeit der Sensoren, allgemeinen Schwingungen oder Störungen vom Antriebsstrang und so weiter, überlagert sein können.

Im vorstehend erläuterten Zusammenhang wird weiterhin bevorzugt, dass die gemittelten Korrekturwerte $AZM_n$ beziehungsweise $BZM_n$ durch eine gleitende Mittelung über den Zusammenhang

$$AZM_n = AZM_{n-1} * (1 - MITKO) + AZ_n * MITKO$$

beziehungsweise

$$BZM_n = BZM_{n-1} * (1 - MITKO) + BZ_n * MITKO$$

bestimmt werden, wobei MITKO eine wählbare Mittelungskonstante mit einem Wertebereich zwischen Null und Eins darstellt.

Eine ebenfalls bevorzugte Weiterbildung der erfindungsgemäßen Verfahren sieht vor, dass der Korrekturwert $AZ_n$ beziehungsweise $BZ_n$ und/oder der gemittelte Korrekturwert $AZM_n$ beziehungsweise $BZM_n$ mit einem Initialisierungswert, vorzugsweise mit Null, vorbesetzt wird, wenn kein oder kein geeigneter Korrekturwert $AZ_n$ beziehungsweise $BZ_n$ und/oder kein geeigneter gemittelter Korrekturwert $AZM_n$ beziehungsweise $BZM_n$ vorliegt. Ein Zustand, in dem kein geeigneter Korrekturwert vorliegt, ist beispielsweise der allererste Start des Verbrennungsmotors. Es ist jedoch ebenfalls denkbar, die Korrekturwertbestimmung beispielsweise nach einer Reparatur des Verbrennungsmotors zurückzusetzen.

Für die erfindungsgemäßen Verfahren wird ebenfalls bevorzugt, dass der Korrekturwert $AZ_n$ beziehungsweise $BZ_n$ und/oder der gemittelte Korrekturwert $AZM_n$ beziehungsweise $BZM_n$ bei einem Motorstart auf den zuletzt ermittelten und gespeicherten Korrekturwert $AZ_n$ beziehungsweise $BZ_n$ und/oder den zuletzt ermittelten und gespeicherten gemittelten Korrekturwert $AZM_n$ beziehungsweise $BZM_n$ gesetzt wird, und dass die Korrektur der Segmentzeiten erst nach einer vorgegebenen Zahl ZS von Schritten zur Berechnung von Korrekturwerten $AZ_n$ beziehungsweise $BZ_n$ und/oder gemittelten Korrekturwert $AZM_n$ beziehungsweise $BZM_n$ durchgeführt wird. Dadurch kann beispielsweise sichergestellt werden, dass sich während der Anlaufphase des Verbrennungsmotors stärker vorhandene Drehzahlschwankungen zu stark auf die Korrekturwerte auswirken, was insbesondere bei gemittelten Korrekturwerten von Bedeutung sein kann.

Sofern gemittelte Korrekturwerte eingesetzt werden, sieht eine bevorzugte Weiterbildung des erfindungsgemäßen Verfahrens im vorstehend erläuterten Zusammenhang weiterhin vor, dass die vorgegebene Zahl ZS von Schritten umgekehrt proportional zur Mittelungskonstante MITKO ist.

Eine erste Ausführungsform der erfindungsgemäßen Vorrichtung baut auf dem gattungsgemäßen Stand der Technik dadurch auf, dass sie bei der Bestimmung des Korrekturwertes den folgenden Zusammenhang auswertet:

$$AZ_n = [(TG_n - TG_0) - (n/z) * (TG_{0'} - TG_0)] / [TG_0 + (n/z) * (TG_{0'} - TG_0)],$$

wobei

$z$      die Anzahl der Zylinder der Brennkraftmaschine ist,
$n$      die Nummer des gerade betrachteten Zylinders ist,
$TG_n$      die gemessene Segmentzeit des Zylinders mit der Nummer n ist,
$TG_0$      die gemessene Segmentzeit eines Bezugssegments eines Bezugszylinders ist,
$TG_{0'}$      die zwei Kurbelwellenumdrehungen nach der Segmentzeit $TG_0$ gemessene Segmentzeit des Bezugssegments des Bezugszylinders ist, und
$AZ_n$      ein Korrekturwert für die Segmentzeit des Zylinders mit der Nummer n ist.

Dadurch ergeben sich die im Zusammenhang mit der ersten Ausführungsform der erfindungsgemäßen Verfahren erläuterten Eigenschaften und Vorteile in gleicher oder ähnlicher Weise, weshalb zur Vermeidung von Wiederholungen auf die entsprechenden Ausführungen verwiesen wird.

Gleiches gilt sinngemäß für die nachfolgend genannte zweite Ausführungsform der erfindungsgemäßen Vorrichtung sowie für die bevorzugten Ausgestaltungen und Weiterbildungen, die sowohl bei der ersten als auch bei der zweiten Ausführungsform der erfindungsgemäßen Vorrichtung verwirklicht werden können.

Die zweite Ausführungsform der erfindungsgemäßen Vorrichtung baut auf dem gattungsgemäßen Stand der Technik dadurch auf, dass sie bei der Bestimmung des Korrekturwertes den folgenden Zusammenhang auswertet:

$$BZ_n = [(TB_n - TB_0) - (2n/z) * (TB_{0'} - TB_0)] / [TB_0 + (2n/z) * (TB_{0'} - TB_0)],$$

wobei

$z$      die Anzahl der Zylinder der Brennkraftmaschine ist,
$n$      die Nummer des gerade betrachteten Segments ist,
$TB_n$      die gemessene Segmentzeit des Segments mit der Nummer n ist,
$TB_0$      die gemessene Segmentzeit eines Bezugssegments ist,
$TB_{0'}$      die eine Kurbelwellenumdrehung nach der Segmentzeit $TG_0$ gemessene Segmentzeit des Bezugssegments ist, und
$BZ_n$      ein Korrekturwert für die Segmentzeit des Segments mit der Nummer n ist.

Bei beiden Ausführungsformen der erfindungsgemäßen Vorrichtung kann vorgesehen sein, dass sie die korrigierten Segmentzeiten ($TK_n$) über den folgenden Zusammenhang bestimmt:

$$TK_n = TG_n * (1 - AZ_n)$$

beziehungsweise

$$TK_n = TB_n * (1 - BZ_n).$$

Weiterhin kann vorgesehen sein, dass sie die korrigierten Segmentzeiten $TK_n$ über den folgenden Zusammenhang bestimmt:

$$TK_n = TG_n * (1 - AZM_n)$$

beziehungsweise

$$TK_n = TB_n * (1 - BZM_n),$$

wobei $AZM_n$ beziehungsweise $BZM_n$ gemittelte Korrekturwerte sind.

Auch für die erfindungsgemäße Vorrichtung wird bevorzugt, dass sie die gemittelten Korrekturwerte $AZM_n$ beziehungsweise $BZM_n$ durch eine gleitende Mittelung über den Zusammenhang

$$AZM_n = AZM_{n-1} * (1 - MITKO) + AZ_n * MITKO$$

beziehungsweise

$$BZM_n = BZM_{n-1} * (1 - MITKO) + BZ_n * MITKO$$

bestimmt, wobei MITKO eine wählbare Mittelungskonstante mit einem Wertebereich zwischen Null und Eins darstellt.

Weiterhin kann vorgesehen sein, dass sie den Korrekturwert $AZ_n$ beziehungsweise $BZ_n$ und/oder den gemittelten Korrekturwert $AZM_n$ beziehungsweise $BZM_n$ mit einem Initialisierungswert, vorzugsweise mit Null, vorbesetzt, wenn kein oder kein geeigneter Korrekturwerte $AZ_n$ beziehungsweise $BZ_n$ und/oder kein geeigneter gemittelter Korrekturwert $AZM_n$ beziehungsweise $BZM_n$ vorliegt.

Auch bei beiden Ausführungsformen der erfindungsgemäßen Vorrichtung kann vorgesehen sein, dass sie den Korrekturwert $AZ_n$ beziehungsweise $BZ_n$ und/oder den gemittelten Korrekturwert $AZM_n$ beziehungsweise $BZM_n$ bei einem Motorstart auf den zuletzt ermittelten und gespeicherten Korrekturwert $AZ_n$ beziehungsweise $BZ_n$ und/oder den zuletzt ermittelten und gespeicherten gemittelten Korrekturwert $AZM_n$ beziehungsweise $BZM_n$ setzt, und dass sie die Korrektur der Segmentzeiten erst nach einer vorgegebenen Zahl ZS von Schritten zur Berechnung von Korrekturwerten $AZ_n$ beziehungsweise $BZ_n$ und/oder gemittelten Korrekturwerten $AZM_n$ beziehungsweise $BZM_n$ durchführt.

In diesem Fall wird weiterhin bevorzugt, dass die vorgegebene Zahl ZS von Schritten umgekehrt proportional zur Mittelungskonstante MITKO ist.

Bevorzugte Ausführungsformen der Erfindung werden nun unter Bezugnahme auf die beigefügten Zeichnungen beispielhaft erläutert.

Es zeigen:

Figur 1    ein Flussdiagramm, das eine erste Ausführungsform des erfindungsgemäßen Verfahrens veranschaulicht;

Figur 2    ein Flussdiagramm, das eine zweite Ausführungsform des erfindungsgemäßen Verfahrens veranschaulicht;

Figur 3    ein Blockschaltbild, das schematisch eine erste Ausführungsform der erfindungsgemäßen Vorrichtung veranschaulicht, wobei dieser Ausführungsform zur Durchführung der ersten Ausführungsform des erfindungsgemäßen Verfahrens geeignet ist; und

Figur 4    ein Blockschaltbild, das schematisch eine zweite Ausführungsform der erfindungsgemäßen Vorrichtung veranschaulicht, wobei dieser Ausführungsform zur Durchführung der zweiten Ausführungsform des erfindungsgemäßen Verfahrens geeignet ist.

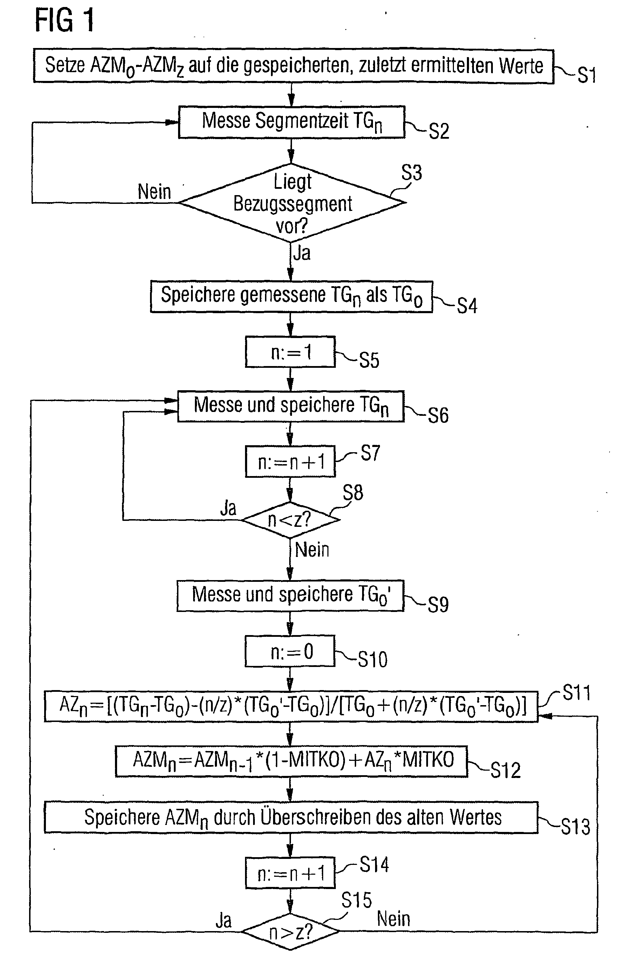

Figur 1 zeigt eine erste Ausführungsform des erfindungsgemäßen Verfahren, wobei die in Figur 1 dargestellte Ausführungsform zur Ermittlung von zylinderindividuellen Korrekturwerten vorgesehen ist. Das dargestellte Verfahren beginnt beim Schritt S1, in dem die gemittelten Korrekturwerte $AZM_0$ bis $AZM_z$ auf die gespeicherten, zuletzt ermittelten Werte gesetzt werden, so dass die gemittelten Korrekturwerte $AZM_0$ bis $AZM_z$ die Werte aufweisen, die beim letzten Motorbetrieb vorlagen. Im Verfahrensschritt S2 wird die Segmentzeit $TG_n$ des aktuellen Segments n gemessen. Anschließend wird im Verfahrensschritt S3 überprüft, ob die gemessene Segmentzeit die Zeit des Bezugssegments war. Als Bezugssegment kann ein beliebiges Segment gewählt werden, vorteilhafterweise das erste in der Zündreihenfolge der Zylinder. Dieses Bezugssegment wird als fehlerfrei definiert beziehungsweise angenommen. Wurde im Schritt S3 festgestellt, dass das Bezugssegment nicht vorliegt, so wird zurück zum Schritt S2 verzweigt, und es wird die nächste Segmentzeit $TG_n$ gemessen. Sobald im Schritt S3 festgestellt wird, dass das Bezugsegment vorliegt, wird zum Schritt S4 verzweigt. Im Schritt S4 wird die gemessene Segmentzeit als Segmentzeit des Bezugssegments $TG_0$ gespeichert. In den folgenden Schritten S5 bis S8 werden anschließend und nacheinander die Segmentzeiten der nachfolgenden Segmente gemessen, die den einzelnen Zylindern der Brennkraftmaschine logisch zugeordnet sind. Zu diesem Zweck wird im Verfahrensschritt S7 zunächst n:=1 gesetzt. Anschließend wird im Verfahrensschritt S6 die aktuelle Segmentzeit $TG_n$ gemessen und gespeichert. Danach wird im Schritt S7 n:=n+1 gesetzt. Wurde die Segmentzeit für alle den einzelnen Zylindern zugeordnete Segmente ermittelt, so wird zum Verfahrensschritt S9 verzweigt, in welchem erneut die Segmentzeit des Bezugssegments $TG_0$, gemessen und gespeichert wird, und zwar zwei Kurbelwellenumdrehungen nach der Messung von $TG_0$. In den Verfahrensschritten S10 bis S15 werden anschließend die Korrekturwerte $AZ_n$ beziehungsweise die gemittelten Korrekturwerte $AZM_n$ für die einzelnen den Zylindern zugeordneten Segmente bestimmt. Zu diesem Zweck wird im Schritt S10 zunächst n:=0 gesetzt. Anschließend wird im Schritt S11 der Korrekturwert $AZ_n$ für das Segment beziehungsweise den Zylinder n über den Zusammenhang

$$AZ_n = [\,(TG_n - TG_0) - (n/z) * (TG_{0'} - TG_0)\,]\,/\,[\,TG_0 + (n/z) * (TG_{0'} - TG_0)\,]$$

bestimmt, wobei z - wie erwähnt - die Anzahl der Zylinder des Verbrennungsmotors angibt. Im Schritt S12 wird aus einem früheren gemittelten Korrekturwert $AZM_{n-1}$, einer Mittelungskonstante MITKO sowie dem Korrekturwert $AZ_n$ ein gemittelter Korrekturwert $AZM_n$ berechnet. Im Schritt S13 wird der im Schritt S12 berechnete gemittelte Korrekturwert $AZM_n$ durch Überschreiben des alten Wertes gespeichert. Im Schritt S14 wird n um Eins erhöht. Sind alle (gemittelten) Korrekturwerte ermittelt, das heißt ist im Schritt S15 n > z, so wird zurück zum Schritt S6 verzweigt. Damit gleich die nächsten Segmentzeiten zur Ermittlung von Korrekturwerten herangezogen werden können, wird die zuletzt gemessene Segmentzeit $TG_{0'}$ des Bezugssegments als neue im nächsten Zyklus zu messende Segmentzeit $TG_0$ verwendet.

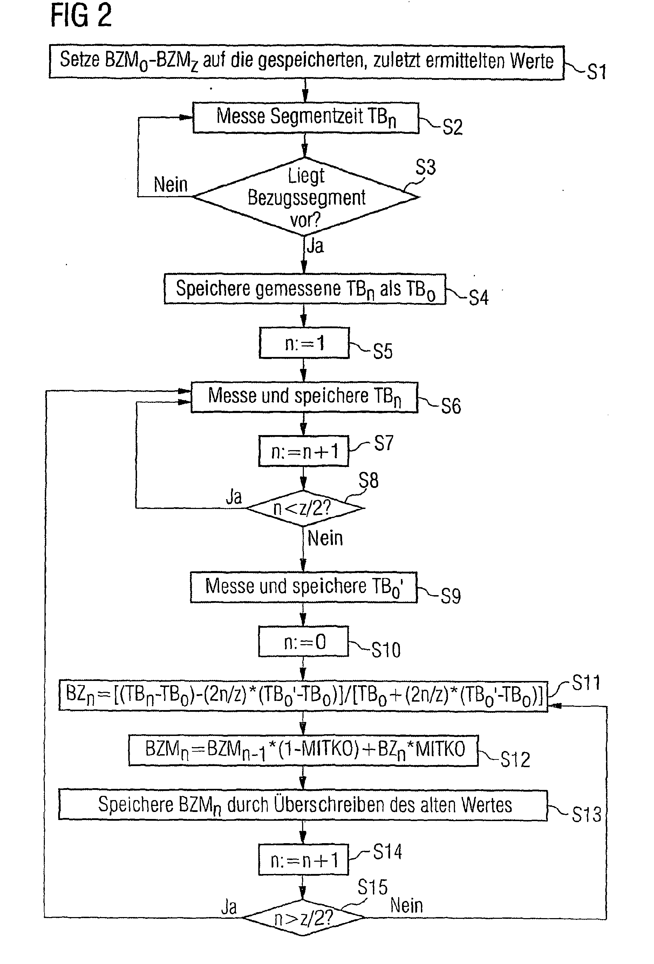

Figur 2 zeigt eine zweite Ausführungsform des erfindungsgemäßen Verfahrens, wobei mit dieser Ausführungsform segmentindividuelle Korrekturwerte ermittelt werden. Die Schritte S1 bis S7 entsprechen den anhand der Figur 1 erläuterten Schritten S1 bis S7, wobei die gemittelten Korrekturwerte bei dieser Ausführungsform mit $BZM_0$ bis $BZM_z$ und die gemessenen Segmentzeiten mit $TB_n$ bezeichnet sind. Bei dieser Ausführungsform ist die Anzahl der Segmente auf der Kurbelwelle oder auf dem Geberrad auf die Hälfte der Anzahl der Zylinder der Brennkraftmaschine beschränkt, das heißt auf z/2. Daher wird vom Schritt S8 zum Schritt S9 verzweigt, wenn die Bedingung n < z/2 nicht erfüllt ist. Im Schritt S9 wird erneut die Segmentzeit des Bezugssegments gemessen und als $TB_0$, gespeichert. Im Gegensatz zu der anhand von Figur 1 erläuterten Ausführungsform erfolgt die erneute Messung der Segmentzeit des Bezugssegments bereits nach einer Kurbelwellenumdrehung. In den nachfolgenden Schritten S10 bis S15 werden die Korrekturwerte $BZ_n$ beziehungsweise die gemittelten Korrekturwerte $BZM_n$ berechnet und gespeichert. Zu diesem Zweck wird im Schritt S10 zunächst n:=0 gesetzt. Anschließend erfolgt im Schritt S11 die Bestimmung von $BZ_n$ über den Zusammenhang

$$BZ_n = [\,(TB_n - TB_0) - (2n/z) * (TB_{0'} - TB_0)\,]\,/\,[\,TB_0 + (2n/z) * (TB_{0'} - TB_0)\,]\,.$$

Danach wird im Schritt S12 der gemittelte Korrekturwert $BZM_n$ über den Zusammenhang

$$BZM_n = BZM_{n-1} * (1 - MITKO) + BZ_n * MITKO$$

bestimmt. Dieser gemittelte Korrekturwert wird im Schritt S13 durch Überschreiben des alten Wertes gespeichert. Anschließend wird n im Schritt S14 um Eins erhöht und im Schritte S15 wird überprüft, ob die Berechnung für alle Segmente durchgeführt wurde, das heißt ob n > z/2 ist. Sofern die Berechnung für alle Segmente durchgeführt wurde, wird wieder zum Schritt S6 verzweigt, wobei auch in diesem Fall die zuletzt gemessene Segmentzeit des Bezugssegments $TB_0$ als neuer Wert für $TB_0$ gewählt werden kann, um das Verfahren direkt weiterführen zu können.

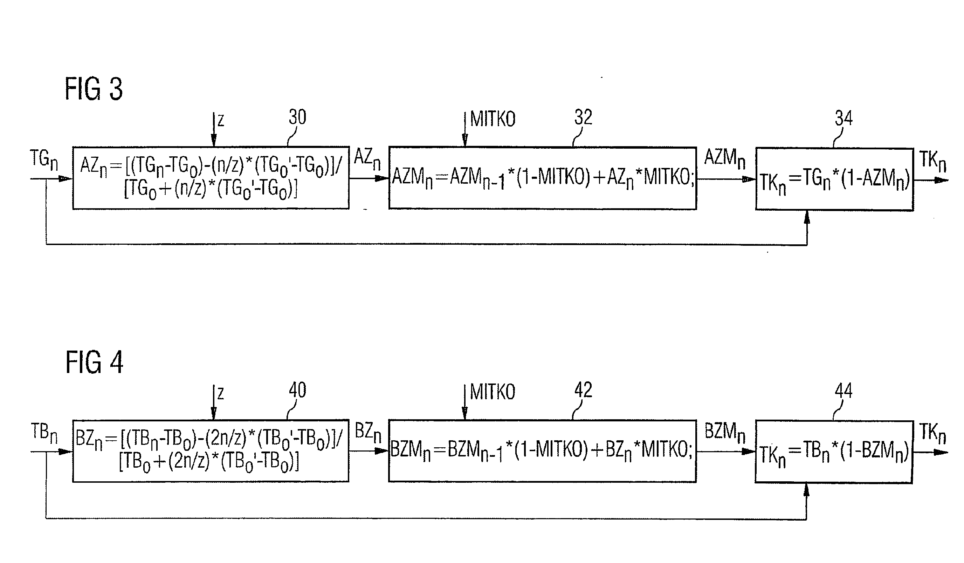

Figur 3 zeigt ein Blockschaltbild, das schematisch eine erste Ausführungsform der erfindungsgemäßen Vorrichtung veranschaulicht, wobei diese Ausführungsform zur Durchführung der ersten Ausführungsform des erfindungsgemäßen Verfahrens geeignet ist. Dabei berechnet der Block 30 in Abhängigkeit von den diesem zugeführten Segmentzeiten $TG_n$ und der ebenfalls zugeführten Zylinderanzahl z die Korrekturwerte $AZ_n$, die dem Block 32 zugeführt werden. Der Block 32 bestimmt aus dem Korrekturwert $AZ_n$, einer Korrekturkonstante MITKO sowie einem vorhergehenden gemittelten Korrekturwert $AZM_{n-1}$ den gemittelten Korrekturwert $AZM_n$. Dem Block 34 wird sowohl die gemessene Segmentzeit $TG_n$ als auch der gemittelte Korrekturwert $AZM_n$ zugeführt. Daraus bestimmt der Block 34 eine korrigierte

Segmentzeit $TK_n$. Die in Figur 3 dargestellte Ausführungsform ist dazu vorgesehen, zylinderindividuelle korrigierte Segmentzeiten $TK_n$ zu liefern.

Figur 4 zeigt ein Blockschaltbild, das schematisch eine zweite Ausführungsform der erfindungsgemäßen Vorrichtung veranschaulicht, wobei dieser Ausführungsform zur Durchführung der zweiten Ausführungsform des erfindungsgemäßen Verfahrens geeignet ist. Im Gegensatz zu der in Figur 3 dargestellten Vorrichtung ist die in Figur 4 dargestellte Vorrichtung dazu vorgesehen, segmentindividuelle Korrekturwerte zu ermitteln. Diesbezüglich wird auf die anhand der Figuren 1 und 2 erläuterten Unterschiede hingewiesen. Gemäß der Darstellung von Figur 4 berechnet ein Block 40 die Korrekturwerte $BZ_n$. Der jeweilige Korrekturwert $BZ_n$ wird dem Block 42 zugeführt, ebenso wie die Mittelungskonstante MITKO, woraus der Block 42 einen gemittelten Korrekturwert $BZM_n$ berechnet. Entsprechend dem Block 34 von Figur 3 wird im Block 44 die korrigierte Segmentzeit $TK_n$ berechnet.

Die in den Figuren 3 und 4 dargestellten Ausführungsformen der erfindungsgemäßen Vorrichtungen können in besonders bevorzugter Weise durch eine Kombination von geeigneter Hard- und Software realisiert werden, was der Fachmann problemlos erkennt. Dies schließt jedoch den Einsatz irgendwelcher anderer geeigneter Schaltungstechniken nicht aus.

**Patentansprüche**

1. Verfahren zur Bestimmung eines Korrekturwertes für eine gemessene Segmentzeit, die eine Welle einer Brennkraftmaschine benötigt, um sich um eine definierte Winkelspanne zu drehen,
**dadurch gekennzeichnet,**
**dass** bei der Bestimmung des Korrekturwertes der folgende Zusammenhang ausgewertet wird:

$$AZ_n = [(TG_n - TG_0) - (n/z) * (TG_{0'} - TG_0)] / [TG_0 + (n/z) * (TG_{0'} - TG_0)],$$

wobei

z die Anzahl der Zylinder der Brennkraftmaschine ist,
n die Nummer des gerade betrachteten Zylinders ist,
$TG_n$ die gemessene Segmentzeit des Zylinders mit der Nummer n ist,
$TG_0$ die gemessene Segmentzeit eines Bezugssegments eines Bezugszylinders ist,
$TG_{0'}$ die zwei Kurbelwellenumdrehungen nach der Segmentzeit $TG_0$ gemessene Segmentzeit des Bezugssegments des Bezugszylinders ist, und
$AZ_n$ ein Korrekturwert für die Segmentzeit des Zylinders mit der Nummer n ist.

2. Verfahren zur Bestimmung eines Korrekturwertes für eine gemessene Segmentzeit, die eine Welle einer Brennkraftmaschine benötigt, um sich um eine definierte Winkelspanne zu drehen,
**dadurch gekennzeichnet,**
**dass** bei der Bestimmung des Korrekturwertes der folgende Zusammenhang ausgewertet wird:

$$BZ_n = [(TB_n - TB_0) - (2n/z) * (TB_{0'} - TB_0)] / [TB_0 + (2n/z) * (TB_{0'} - TB_0)],$$

wobei

z die Anzahl der Zylinder der Brennkraftmaschine ist,
n die Nummer des gerade betrachteten Segments ist,
$TB_n$ die gemessene Segmentzeit des Segments mit der Nummer n ist,
$TB_0$ die gemessene Segmentzeit eines Bezugssegments ist,
$TB_{0'}$ die eine Kurbelwellenumdrehung nach der Segmentzeit $TG_0$ gemessene Segmentzeit des Bezugssegments ist, und
$BZ_n$ ein Korrekturwert für die Segmentzeit des Segments mit der Nummer n ist.

3. Verfahren nach Anspruch 1 oder 2,
**dadurch gekennzeichnet,**

**dass** die korrigierten Segmentzeiten ($TK_n$) über den folgenden Zusammenhang bestimmt werden:

$$TK_n = TG_n * (1-AZ_n)$$

beziehungsweise

$$TK_n = TB_n * (1-BZ_n).$$

4. Verfahren nach Anspruch 1 oder 2,
   **dadurch gekennzeichnet,**
   **dass** die korrigierten Segmentzeiten $TK_n$ über den folgenden Zusammenhang bestimmt werden:

$$TK_n = TG_n * (1-AZM_n)$$

beziehungsweise

$$TK_n = TB_n * (1-BZM_n),$$

wobei $AZM_n$ beziehungsweise $BZM_n$ gemittelte Korrekturwerte sind.

5. Verfahren nach Anspruch 4,
   **dadurch gekennzeichnet,**
   **dass** die gemittelten Korrekturwerte $AZM_n$ beziehungsweise $BZM_n$ durch eine gleitende Mittelung über den Zusammenhang

$$AZM_n = AZM_{n-1} * (1-MITKO) + AZ_n * MITKO$$

beziehungsweise

$$BZM_n = BZM_{n-1} * (1-MITKO) + BZ_n * MITKO$$

bestimmt werden, wobei MITKO eine wählbare Mittelungskonstante mit einem Wertebereich zwischen Null und Eins darstellt.

6. Verfahren nach einem der vorhergehenden Ansprüche,
   **dadurch gekennzeichnet,**
   **dass** der Korrekturwert $AZ_n$ beziehungsweise $BZ_n$ und/oder der gemittelte Korrekturwert $AZM_n$ beziehungsweise $BZM_n$ mit einem Initialisierungswert, vorzugsweise mit Null, vorbesetzt wird, wenn kein oder kein geeigneter Korrekturwerte $AZ_n$ beziehungsweise $BZ_n$ und/oder kein geeigneter gemittelter Korrekturwert $AZM_n$ beziehungsweise $BZM_n$ vorliegt.

7. Verfahren nach einem der vorhergehenden Ansprüche,
   **dadurch gekennzeichnet,**
   **dass** der Korrekturwert $AZ_n$ beziehungsweise $BZ_n$ und/oder der gemittelte Korrekturwert $AZM_n$ beziehungsweise $BZM_n$ bei einem Motorstart auf den zuletzt ermittelten und gespeicherten Korrekturwert $AZ_n$ beziehungsweise $BZ_n$ und/oder den zuletzt ermittelten und gespeicherten gemittelten Korrekturwert $AZM_n$ beziehungsweise $BZM_n$ gesetzt wird, und dass die Korrektur der Segmentzeiten erst nach einer vorgegebenen Zahl ZS von Schritten zur Berechnung von Korrekturwerten $AZ_n$ beziehungsweise $BZ_n$ und/oder gemittelten Korrekturwert $AZM_n$ beziehungsweise $BZM_n$ durchgeführt wird.

8. Verfahren nach Anspruch 5 und 7,
**dadurch gekennzeichnet,**
**dass** die vorgegebene Zahl ZS von Schritten umgekehrt proportional zur Mittelungskonstante MITKO ist.

9. Vorrichtung zur Bestimmung eines Korrekturwertes für eine gemessene Segmentzeit, die eine Welle einer Brennkraftmaschine benötigt, um sich um eine definierte Winkelspanne zu drehen,
**dadurch gekennzeichnet,**
**dass** sie bei der Bestimmung des Korrekturwertes den folgenden Zusammenhang auswertet:

$$AZ_n = [(TG_n - TG_0) - (n/z) * (TG_{0'} - TG_0)] / [TG_0 + (n/z) * (TG_{0'} - TG_0)],$$

wobei

z die Anzahl der Zylinder der Brennkraftmaschine ist,
n die Nummer des gerade betrachteten Zylinders ist,
$TG_n$ die gemessene Segmentzeit des Zylinders mit der Nummer n ist,
$TG_0$ die gemessene Segmentzeit eines Bezugssegments eines Bezugszylinders ist,
$TG_{0'}$ die zwei Kurbelwellenumdrehungen nach der Segmentzeit $TG_0$ gemessene Segmentzeit des Bezugssegments des Bezugszylinders ist, und
$AZ_n$ ein Korrekturwert für die Segmentzeit des Zylinders mit der Nummer n ist.

10. Vorrichtung zur Bestimmung eines Korrekturwertes für eine gemessene Segmentzeit, die eine Welle einer Brennkraftmaschine benötigt, um sich um eine definierte Winkelspanne zu drehen,
**dadurch gekennzeichnet,**
**dass** sie bei der Bestimmung des Korrekturwertes den folgenden Zusammenhang auswertet:

$$BZ_n = [(TB_n - TB_0) - (2n/z) * (TB_{0'} - TB_0)] / [TB_0 + (2n/z) * (TB_{0'} - TB_0)],$$

wobei

z die Anzahl der Zylinder der Brennkraftmaschine ist,
n die Nummer des gerade betrachteten Segments ist,
$TB_n$ die gemessene Segmentzeit des Segments mit der Nummer n ist,
$TB_0$ die gemessene Segmentzeit eines Bezugssegments ist,
$TB_{0'}$ die eine Kurbelwellenumdrehung nach der Segmentzeit $TG_0$ gemessene Segmentzeit des Bezugssegments ist, und
$BZ_n$ ein Korrekturwert für die Segmentzeit des Segments mit der Nummer n ist.

11. Vorrichtung nach Anspruch 9 oder 10,
**dadurch gekennzeichnet,**
**dass** sie die korrigierten Segmentzeiten ($TK_n$) über den folgenden Zusammenhang bestimmt:

$$TK_n = TG_n * (1 - AZ_n)$$

beziehungsweise

$$TK_n = TB_n * (1 - BZ_n).$$

12. Vorrichtung nach Anspruch 9 oder 10,
**dadurch gekennzeichnet,**

**dass** sie die korrigierten Segmentzeiten $TK_n$ über den folgenden Zusammenhang bestimmt :

$$TK_n = TG_n * (1 - AZM_n)$$

beziehungsweise

$$TK_n = TB_n * (1 - BZM_n),$$

wobei $AZM_n$ beziehungsweise $BZM_n$ gemittelte Korrekturwerte sind.

13. Vorrichtung nach Anspruch 12,
    **dadurch gekennzeichnet,**
    **dass** sie die gemittelten Korrekturwerte $AZM_n$ beziehungsweise $BZM_n$ durch eine gleitende Mittelung über den Zusammenhang

$$AZM_n = AZM_{n-1} * (1 - MITKO) + AZ_n * MITKO$$

beziehungsweise

$$BZM_n = BZM_{n-1} * (1 - MITKO) + BZ_n * MITKO$$

bestimmt, wobei MITKO eine wählbare Mittelungskonstante mit einem Wertebereich zwischen Null und Eins darstellt.

14. Vorrichtung nach einem der Ansprüche 9 bis 13,
    **dadurch gekennzeichnet,**
    **dass** sie den Korrekturwert $AZ_n$ beziehungsweise $BZ_n$ und/oder den gemittelten Korrekturwert $AZM_n$ beziehungsweise $BZM_n$ mit einem Initialisierungswert, vorzugsweise mit Null, vorbesetzt, wenn kein oder kein geeigneter Korrekturwerte $AZ_n$ beziehungsweise $BZ_n$ und/oder kein geeigneter gemittelter Korrekturwert $AZM_n$ beziehungsweise $BZM_n$ vorliegt.

15. Vorrichtung nach einem der Ansprüche 9 bis 14,
    **dadurch gekennzeichnet,**
    **dass** sie den Korrekturwert $AZ_n$ beziehungsweise $BZ_n$ und/oder den gemittelten Korrekturwert $AZM_n$ beziehungsweise $BZM_n$ bei einem Motorstart auf den zuletzt ermittelten und gespeicherten Korrekturwert $AZ_n$ beziehungsweise $BZ_n$ und/oder den zuletzt ermittelten und gespeicherten gemittelten Korrekturwert $AZM_n$ beziehungsweise $BZM_n$ setzt, und dass sie die Korrektur der Segmentzeiten erst nach einer vorgegebenen Zahl ZS von Schritten zur Berechnung von Korrekturwerten $AZ_n$ beziehungsweise $BZ_n$ und/oder gemittelten Korrekturwerten $AZM_n$ beziehungsweise $BZM_n$ durchführt.

16. Vorrichtung nach Anspruch 13 und 15,
    **dadurch gekennzeichnet,**
    **dass** die vorgegebene Zahl ZS von Schritten umgekehrt proportional zur Mittelungskonstante MITKO ist.

**Claims**

1. A method for determining a correction value for a measured segment time, which a shaft of an internal combustion engine needs in order to rotate about a defined angular range,
   **characterised in that**,
   in determining the correction value, the following relationship is evaluated:

$$AZ_n=[(TG_n-TG_0)-(n/z)*(TG_0{}'-TG_0)]/[TG_0+(n/z)*(TG_0{}'-TG_0)],$$

where

z is the number of cylinders of the internal combustion engine,
n is the number of the cylinder currently under consideration,
$TG_n$ is the measured segment time of the cylinder with the number n,
$TG_0$ is the measured segment time of a reference segment of a reference cylinder,
$TG_{0'}$ is the segment time of the reference segment of the reference cylinder measured two crankshaft rotations after the segment time $TG_0$, and
$AZ_n$ is a correction value for the segment time of the cylinder with the number n.

2. A method for determining a correction value for a measured segment time, which a shaft of an internal combustion engine needs in order to rotate about a defined angular range,
**characterised in that**,
in determining the correction value, the following relationship is evaluated:

$$BZ_n=[(TB_n-TB_0)-(2n/z)*(TB_0{}'-TB_0)]/[TB_0+(2n/z)*(TB_0{}'-TB_0)],$$

where

z is the number of cylinders of the internal combustion engine,
n is the number of the segment currently under consideration,
$TB_n$ is the measured segment time of the segment with the number n,
$TB_0$ is the measured segment time of a reference segment,
$TB_{0'}$ is the segment time of the reference segment measured one crankshaft rotation after the segment time $TG_0$, and
$BZ_n$ is a correction value for the segment time of the segment with the number n.

3. A method according to claim 1 or 2,
**characterised in that**
the corrected segment times ($TK_n$) are determined by means of the following relationship:

$$TK_n=TG_n*(1-AZ_n)$$

or

$$TK_n=TB_n*(1-BZ_n).$$

4. A method according to claim 1 or 2,
**characterised in that**
the corrected segment times $TK_n$ are determined by means of the following relationship:

$$TK_n=TG_n*(1-AZM_n)$$

or

$$TK_n = TB_n * (1 - BZM_n),$$

where $AZM_n$ or $BZM_n$ are averaged correction values.

**5.** A method according to claim 4,
**characterised in that**
the averaged correction values $AZM_n$ or $BZM_n$ are determined by calculating a sliding average by means of the relationship

$$AZM_n = AZM_{n-1} * (1 - MITKO) + AZ_n * MITKO$$

or

$$BZM_n = BZM_{n-1} * (1 - MITKO) + BZ_n * MITKO$$

where MITKO represents a selectable averaging constant with a value range between zero and one.

**6.** A method according to any one of the preceding claims,
**characterised in that**
the correction value $AZ_n$ or $BZ_n$ and/or the averaged correction value $AZM_n$ or $BZM_n$ is preset to an initialisation value, preferably to zero, if no correction value or no suitable correction value $AZ_n$ or $BZ_n$ and/or no suitable averaged correction value $AZM_n$ or $BZM_n$ is available.

**7.** A method according to any one of the preceding claims,
**characterised in that**
the correction value $AZ_n$ or $BZ_n$ and/or the averaged correction value $AZM_n$ or $BZM_n$ upon a start of engine operation is set to the last determined and stored correction value $AZ_n$ or $BZ_n$ and/or the last determined and stored averaged correction value $AZM_n$ or $BZM_n$, and **in that** correction of the segment times is carried out only after a predetermined number ZS of steps for calculating correction values $AZ_n$ or $BZ_n$ and/or averaged correction values $AZM_n$ or $BZM_n$.

**8.** A method according to claim 5 and claim 7,
**characterised in that**
the predetermined number ZS of steps is inversely proportional to the averaging constant MITKO.

**9.** A device for determining a correction value for a measured segment time, which a shaft of an internal combustion engine needs in order to rotate about a defined angular range,
**characterised in that**
in determining the correction value, it evaluates the following relationship:

$$AZ_n = [(TG_n - TG_0) - (n/z) * (TG_{0'} - TG_0)] / [TG_0 + (n/z) * (TG_{0'} - TG_0)],$$

where

z is the number of cylinders of the internal combustion engine,
n is the number of the cylinder currently under consideration,
$TG_n$ is the measured segment time of the cylinder with the number n,
$TG_0$ is the measured segment time of a reference segment of a reference cylinder,
$TG_{0'}$ is the segment time of the reference segment of the reference cylinder measured two crankshaft rotations after the segment time $TG_0$, and
$AZ_n$ is a correction value for the segment time of the cylinder with the number n.

10. A device for determining a correction value for a measured segment time, which a shaft of an internal combustion engine needs in order to rotate about a defined angular range,
    **characterised in that**
    in determining the correction value, it evaluates the following relationship:

$$BZ_n = [(TB_n - TB_0) - (2n/z) * (TB_0, -TB_0)] / [TB_0 + (2n/z) * (TB_0, -TB_0)],$$

where

z is the number of cylinders of the internal combustion engine,
n is the number of the segment currently under consideration,
$TB_n$ is the measured segment time of the segment with the number n,
$TB_0$ is the measured segment time of a reference segment,
$TB_0$, is the segment time of the reference segment measured one crankshaft rotation after the segment time $TG_0$, and
$BZ_n$ is a correction value for the segment time of the segment with the number n.

11. A device according to claim 9 or claim 10,
    **characterised in that**
    it determines the corrected segment times ($TK_n$) by means of the following relationship:

$$TK_n = TG_n * (1 - AZ_n)$$

or

$$TK_n = TB_n * (1 - BZ_n).$$

12. A device according to claim 9 or claim 10,
    c h a r a c t e r i s e d i n t h a t
    it determines the corrected segment times $TK_n$ by means of the following relationship:

$$TK_n = TG_n * (1 - AZM_n)$$

or

$$TK_n = TB_n * (1 - BZM_n),$$

where $AZM_n$ or $BZM_n$ are averaged correction values.

13. A device according to claim 12,
    **characterised in that**
    it determines the averaged correction values $AZM_n$ or $BZM_n$ by calculating a sliding average by means of the relationship

$$AZM_n = AZM_{n-1} * (1 - MITKO) + AZ_n * MITKO$$

or

$$BZM_n = BZM_{n-1} * (1 - MITKO) + BZ_n * MITKO$$

where MITKO represents a selectable averaging constant with a value range between zero and one.

**14.** A device according to any one of claims 9 to 13,
**characterised in that**
it presets the correction value $AZ_n$ or $BZ_n$ and/or the averaged correction value $AZM_n$ or $BZM_n$ to an initialisation value, preferably to zero, if no correction value or no suitable correction value $AZ_n$ or $BZ_n$ and/or no suitable averaged correction value $AZM_n$ or $BZM_n$ is available.

**15.** A device according to any one of claims 9 to 14,
**characterised in that**
it sets the correction value $AZ_n$ or $BZ_n$ and/or the averaged correction value $AZM_n$ or $BZM_n$ upon a start of engine operation to the last determined and stored correction value $AZ_n$ or $BZ_n$ and/or the last determined and stored averaged correction value $AZM_n$ or $BZM_n$, and **in that** it carries out the correction of the segment times only after a predetermined number ZS of steps for calculating correction values $AZ_n$ or $BZ_n$ and/or averaged correction values $AZM_n$ or $BZM_n$.

**16.** A device according to claim 13 and claim 15,
**characterised in that**
the predetermined number ZS of steps is inversely proportional to the averaging constant MITKO.

**Revendications**

**1.** Procédé pour la détermination d'une valeur de correction pour un temps segmentaire mesuré, nécessitée par un arbre d'un moteur à combustion interne pour une rotation sur une plage angulaire définie,
**caractérisé**
**en ce que** la relation suivante est évaluée pour la détermination de la valeur de correction :

$$AZ_n = [(TG_n - TG_0) - (n/z) * (TG_{0'} - TG_0)] / [TG_0 + (n/z) * (TG_{0'} - TG_0)],$$

où

z est le nombre des cylindres du moteur à combustion interne,
n le numéro du cylindre actuellement considéré,
$TG_n$ le temps segmentaire mesuré du cylindre portant le numéro n,
$TG_0$ le temps segmentaire mesuré d'un segment de référence d'un cylindre de référence,
$TG_{0'}$ le temps segmentaire du segment de référence du cylindre de référence mesuré deux rotations de vilebrequin après le temps segmentaire $TG_0$, et
$AZ_n$ une valeur de correction pour le temps segmentaire du cylindre portant le numéro n.

**2.** Procédé pour la détermination d'une valeur de correction pour un temps segmentaire mesuré, nécessitée par un arbre d'un moteur à combustion interne pour une rotation sur une plage angulaire définie,
**caractérisé**
**en ce que** la relation suivante est évaluée pour la détermination de la valeur de correction :

$$BZ_n = [(TB_n - TB_0) - (2n/z) * (TB_{0'} - TB_0)] / [TB_0 + (2n/z) * (TB_{0'} - TB_0)],$$

où

z est le nombre des cylindres du moteur à combustion interne,
n le numéro du segment actuellement considéré,
$TB_n$ le temps segmentaire mesuré du segment portant le numéro n,
$TB_0$ le temps segmentaire mesuré d'un segment de référence,
$TB_{0'}$ le temps segmentaire du segment de référence mesuré une rotation de vilebrequin après le temps segmentaire $TG_0$, et
$BZ_n$ une valeur de correction pour le temps segmentaire du segment portant le numéro n.

3. Procédé selon la revendication 1 ou 2,
**caractérisé**
**en ce que** les temps segmentaires corrigés ($TK_n$) sont déterminés au moyen de la relation suivante :

$$TK_n = TG_n*(1- AZ_n),$$

ou

$$TK_n = TB_n*(1- BZ_n).$$

4. Procédé selon la revendication 1 ou 2,
**caractérisé**
**en ce que** les temps segmentaires corrigés $TK_n$ sont déterminés au moyen de la relation suivante :

$$TK_n = TG_n*(1- AZM_n),$$

ou

$$TK_n = TB_n*(1- BZM_n),$$

où $AZM_n$ et $BZM_n$ sont des valeurs de correction moyennes.

5. Procédé selon la revendication 4,
**caractérisé**
**en ce que** les valeurs de correction moyennes $AZM_n$ et $BZM_n$ sont déterminées par calcul de moyenne mobile au moyen de la relation

$$AZM_n = AZM_{n-1}*(1-MITKO)+ AZ_n*MITKO,$$

ou

$$BZM_n = BZM_{n-1}*(1-MITKO)+ BZ_n*MITKO,$$

où MITKO représente une constante de calcul de moyenne sélectionnable dans une étendue de valeur entre zéro et un.

6. Procédé selon l'une des revendications précédentes,

**caractérisé**

**en ce qu'**à la valeur de correction $AZ_n$ ou $BZ_n$ et/ou à la valeur moyenne de correction $AZM_n$ ou $BZM_n$ est attribuée une valeur d'initialisation par défaut, préférentiellement zéro, si aucune valeur de correction, ou aucune valeur de correction adéquate $AZ_n$ ou $BZ_n$, et/ou aucune valeur moyenne de correction adéquate $AZM_n$ ou $BZM_n$ n'est présentée.

7. Procédé selon l'une des revendications précédentes,

**caractérisé**

**en ce que** la valeur de correction $AZ_n$ ou $BZ_n$ et/ou la valeur moyenne de correction $AZM_n$ ou $BZM_n$ est fixée au démarrage du moteur à la dernière valeur de correction $AZ_n$ ou $BZ_n$ déterminée et mémorisée, et/ou à la dernière valeur moyenne de correction $AZM_n$ ou $BZM_n$ déterminée et mémorisée, et en ce que la correction des temps segmentaires n'est effectuée qu'après un nombre $ZS$ prescrit d'étapes de calcul des valeurs de correction $AZ_n$ ou $BZ_n$ et/ou de la valeur moyenne de correction $AZM_n$ ou $BZM_n$.

8. Procédé selon les revendications 5 et 7,

**caractérisé**

**en ce que** le nombre d'étapes $ZS$ prescrit est inversement proportionnel à la constante de calcul de moyenne $MITKO$.

9. Dispositif pour la détermination d'une valeur de correction pour un temps segmentaire mesuré, nécessitée par un arbre d'un moteur à combustion interne pour une rotation sur une plage angulaire définie,

**caractérisé**

**en ce qu'**il évalue la relation suivante pour la détermination de la valeur de correction :

$$AZ_n = [(TG_n - TG_0) - (n/z) * (TG_{0'} - TG_0)] / [TG_0 + (n/z) * (TG_{0'} - TG_0)],$$

où

$z$ est le nombre des cylindres du moteur à combustion interne,
$n$ le numéro du cylindre actuellement considéré,
$TG_n$ le temps segmentaire mesuré du cylindre portant le numéro n,
$TG_0$ le temps segmentaire mesuré d'un segment de référence d'un cylindre de référence,
$TG_{0'}$ le temps segmentaire du segment de référence du cylindre de référence mesuré deux rotations de vilebrequin après le temps segmentaire $TG_0$, et
$AZ_n$ une valeur de correction pour le temps segmentaire du cylindre portant le numéro n.

10. Dispositif pour la détermination d'une valeur de correction pour un temps segmentaire mesuré, nécessitée par un arbre d'un moteur à combustion interne pour une rotation sur une plage angulaire définie,

**caractérisé**

**en ce qu'**il évalue la relation suivante pour la détermination de la valeur de correction :

$$BZ_n = [(TB_n - TB_0) - (2n/z) * (TB_{0'} - TB_0)] / [TB_0 + (2n/z) * (TB_{0'} - TB_0)],$$

où

$z$ est le nombre des cylindres du moteur à combustion interne,
$n$ le numéro du segment actuellement considéré,
$TB_n$ le temps segmentaire mesuré du segment portant le numéro n,
$TB_0$ le temps segmentaire mesuré d'un segment de référence,
$TB_{0'}$ le temps segmentaire du segment de référence mesuré une rotation de vilebrequin après le temps segmentaire $TG_0$, et
$BZ_n$ une valeur de correction pour le temps segmentaire du segment portant le numéro n.

11. Dispositif selon la revendication 9 ou 10,

**caractérisé**
**en ce qu'**il détermine les temps segmentaires corrigés ($TK_n$) au moyen de la relation suivante :

$$TK_n = TG_n * (1- AZ_n),$$

ou

$$TK_n = TB_n * (1- BZ_n).$$

12. Dispositif selon la revendication 9 ou 10,
    **caractérisé**
    **en ce qu'**il détermine les temps segmentaires corrigés $TK_n$ au moyen de la relation suivante :

$$TK_n = TG_n * (1- AZM_n),$$

ou

$$TK_n = TB_n * (1- BZM_n),$$

où $AZM_n$ et $BZM_n$ sont des valeurs de correction moyennes.

13. Dispositif selon la revendication 12,
    **caractérisé**
    **en ce qu'**il détermine les valeurs de correction moyennes $AZM_n$ et $BZM_n$ par calcul de moyenne mobile au moyen de la relation

$$AZM_n = AZM_{n-1} * (1-MITKO) + AZ_n * MITKO,$$

ou

$$BZM_n = BZM_{n-1} * (1-MITKO) + BZ_n * MITKO,$$

où MITKO représente une constante de calcul de moyenne sélectionnable dans une étendue de valeur entre zéro et un.

14. Dispositif selon l'une des revendications 9 à 13,
    **caractérisé**
    **en ce qu'**il attribue à la valeur de correction $AZ_n$ ou $BZ_n$ et/ou à la valeur moyenne de correction $AZM_n$ ou $BZM_n$ une valeur d'initialisation par défaut, préférentiellement zéro, si aucune valeur de correction, ou aucune valeur de correction adéquate $AZ_n$ ou $BZ_n$, et/ou aucune valeur moyenne de correction adéquate $AZM_n$ ou $BZM_n$ n'est présentée.

15. Dispositif selon l'une des revendications 9 à 14,
    **caractérisé**
    **en ce qu'**il fixe la valeur de correction $AZ_n$ ou $BZ_n$ et/ou la valeur moyenne de correction $AZM_n$ ou $BZM_n$ au démarrage du moteur à la dernière valeur de correction $AZ_n$ ou $BZ_n$ déterminée et mémorisée, et/ou à la dernière valeur

moyenne de correction $AZM_n$ ou $BZM_n$ déterminée et mémorisée, et en ce qu'il n'effectue la correction des temps segmentaires qu'après un nombre ZS prescrit d'étapes de calcul des valeurs de correction $AZ_n$ ou $BZ_n$ et/ou de la valeur moyenne de correction $AZM_n$ ou $BZM_n$.

16. Dispositif selon les revendications 13 et 15,
**caractérisé**
**en ce que** le nombre d'étapes ZS prescrit est inversement proportionnel à la constante de calcul de moyenne MITKO.

## FIG 1

Setze $AZM_0$-$AZM_z$ auf die gespeicherten, zuletzt ermittelten Werte —S1

Messe Segmentzeit $TG_n$ —S2

Liegt Bezugssegment vor? S3 — Nein / Ja

Speichere gemessene $TG_n$ als $TG_0$ —S4

$n := 1$ —S5

Messe und speichere $TG_n$ —S6

$n := n+1$ —S7

$n < z?$ S8 — Ja / Nein

Messe und speichere $TG_0'$ —S9

$n := 0$ —S10

$AZ_n = [(TG_n\text{-}TG_0)-(n/z)*(TG_0'\text{-}TG_0)]/[TG_0+(n/z)*(TG_0'\text{-}TG_0)]$ —S11

$AZM_n = AZM_{n-1}*(1\text{-}MITKO)+AZ_n*MITKO$ —S12

Speichere $AZM_n$ durch Überschreiben des alten Wertes —S13

$n := n+1$ —S14

$n > z?$ S15 — Ja / Nein

# FIG 2

Setze $BZM_0$-$BZM_z$ auf die gespeicherten, zuletzt ermittelten Werte — S1

Messe Segmentzeit $TB_n$ — S2

Liegt Bezugssegment vor? — S3
Nein

Ja

Speichere gemessene $TB_n$ als $TB_0$ — S4

$n := 1$ — S5

Messe und speichere $TB_n$ — S6

$n := n+1$ — S7

$n < z/2$? — S8
Ja

Nein

Messe und speichere $TB_0'$ — S9

$n := 0$ — S10

$BZ_n = [(TB_n - TB_0) - (2n/z) * (TB_0' - TB_0)] / [TB_0 + (2n/z) * (TB_0' - TB_0)]$ — S11

$BZM_n = BZM_{n-1} * (1-MITKO) + BZ_n * MITKO$ — S12

Speichere $BZM_n$ durch Überschreiben des alten Wertes — S13

$n := n+1$ — S14

$n > z/2$? — S15
Ja      Nein

**FIG 3**

$$AZ_n = [(TG_n - TG_0) - (n/z)^*(TG_0' - TG_0)]/[TG_0 + (n/z)^*(TG_0' - TG_0)]$$

Block 30, input $TG_n$, control $z$, output $AZ_n$

$$AZM_n = AZM_{n-1}^*(1 - MITKO) + AZ_n^*MITKO;$$

Block 32, control $MITKO$, output $AZM_n$

$$TK_n = TG_n^*(1 - AZM_n)$$

Block 34, output $TK_n$

**FIG 4**

$$BZ_n = [(TB_n - TB_0) - (2n/z)^*(TB_0' - TB_0)]/[TB_0 + (2n/z)^*(TB_0' - TB_0)]$$

Block 40, input $TB_n$, control $z$, output $BZ_n$

$$BZM_n = BZM_{n-1}^*(1 - MITKO) + BZ_n^*MITKO;$$

Block 42, control $MITKO$, output $BZM_n$

$$TK_n = TB_n^*(1 - BZM_n)$$

Block 44, output $TK_n$